Europäisches Patentamt

European Patent Office

Office européen des brevets

(19)

(11) Numéro de publication: **0 065 458**
**B1**

(12) **FASCICULE DE BREVET EUROPÉEN**

(45) Date de publication du fascicule du brevet:
23.07.86

(51) Int. Cl.⁴: **G 01 P 3/48,** G 01 H 1/00

(21) Numéro de dépôt: **82400840.3**

(22) Date de dépôt: **07.05.82**

(54) **Capteur capacitif de déplacement d'objets.**

(30) Priorité: **15.05.81 FR 8109681**

(43) Date de publication de la demande:
**24.11.82 Bulletin 82/47**

(45) Mention de la délivrance du brevet:
**23.07.86 Bulletin 86/30**

(84) Etats contractants désignés:
**DE FR GB IT SE**

(56) Documents cité:
**FR-A-1 417 215**
**FR-A-2 061 983**
**GB-A-1 053 389**
**US-A-3 205 713**
**US-A-4 021 681**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Fournier, Jacques Maurice Arnaud, 6, rue Marceau, F-92320 Chatillon (FR)**

(74) Mandataire: **Moinat, François, S.N.E.C.M.A. Service des Brevets Boîte Postale 81, F-91003 Evry Cedex (FR)**

LIBER, STOCKHOLM 1986

## Description

La présente invention concerne un capteur de déplacement d'objets plus particulièrement adapté au comptage à grande vitesse de défilement d'objets non magnétiques qu'ils soient peu ou très conducteurs.

Les capteurs de l'art antérieur (FR—A— 2061983), destinés à compter des objets métalliques défilant à grande vitesse, utilisent, soit les propriétés magnétiques des matériaux composant ces objets, soit leur conductivité électrique. En effet, le passage d'une masse composée d'un matériau ferromagnétique à proximité d'une bobine de fil conducteur comportant un noyau métallique aimanté provoque une variation de l'induction magnétique dans le noyau, donc une impulsion de tension au bord de la bobine. Cette impulsion est ensuite amplifiée, filtrée, et mise en forme afin d'être prise en compte par des circuits logiques de comptage. La conductivité électrique est, pour sa part, utilisée en exploitant la variation de self d'un bobinage alimenté par un courant. Cette variation de self provient des courants de Foucault induits dans le métal conducteur dont sont faits les objets. La sensibilité du ce système est directement liée à la conductivité du métal. On connait également par le US—A—4 021 681 un capteur dans lequel les variations de réluctance d'une bobine entraînent des variations de la fréquence de résonnance d'un circuit LC, un oscillateur à fréquence commandée étant asservi à ladite fréquence de résonnance.

Ces capteurs de l'art antérieur présentent plusieurs inconvénients qui limitent leur utilisation. En effet, leur emploi nécessite la présence d'un élément ferromagnétique dans les objets comprés ou une faible résistivité electrique. De plus, en présence de bruit radioélectrique, plus spécialement du type haute fréquence, la bobine de fil conducteur de capteur fournit une tension avec un niveau de bruit souvent suffisant pour empêcher un comptage précis des objets. Ce bruit radioélectrique est particulièrement important dans des structures telles que les turboréacteurs d'avion où il est nécessaire de mesurer avec précision la vitesse de rotation du rotor.

La présente invention a pour objet un capteur de déplacement d'objets qui vise à remédier à ces inconvénients. A cet effet, le capteur de déplacement d'objets mobiles conducteurs conforme à l'invention comporte un circuit résonnant composé au moins d'un élément selfique et d'un condensateur et est caractérisé en ce que une des armatures est constituée par une surface conductrice et l'autre successivement par chaque objet passant à proximité de cette surface conductrice, ledit circuit résonnant étant couplé à un premier oscillateur dont il détermine la fréquence de fonctionnement de sorte que le signal issu de ce premier oscillateur est modulé en fréquence au rythme du passage des objets à proximité du capteur. Le signal modulé en fréquence issu du premier oscillateur est démodulé au moyen d'un discriminateur de fréquence comportant un second oscillateur asservi par une boucle de phase comprenant un premier circuit multiplieur et un premier intégrateur, le signal de référence appliqué à l'une des entrées du circuit multiplieur étant le signal modulé en fréquence issu du premier oscillateur.

Selon une autre caractéristique de l'invention, le signal de sortie du premier intégrateur est connecté à une entrée d'un second multiplieur dont la sortie est reliée à la seconde entrée dudit multiplieur par l'intermédiaire d'un second intégrateur et d'un troisième oscillateur montés en série.

D'autres caractéristique de l'invention ressortiront de la description et des figures d'exemples de mise en oeuvre de l'invention donnés à titre non limitatifs.

La figure 1 est in schéma qui permet d'ilustrer le fonctionnement d'un capteur de déplacement d'objets conforme à l'invention.

La figure 2 est un exemple de réalisation du circuit résonnant utilisé pour la mise en oeuvre de l'invention.

La figure 3 est un bloc diagramme qui montre un exemple de réalisation préférentiel pour l'exploitation du signal modulé en fréquence utilisé dans un capteur conforme à l'invention.

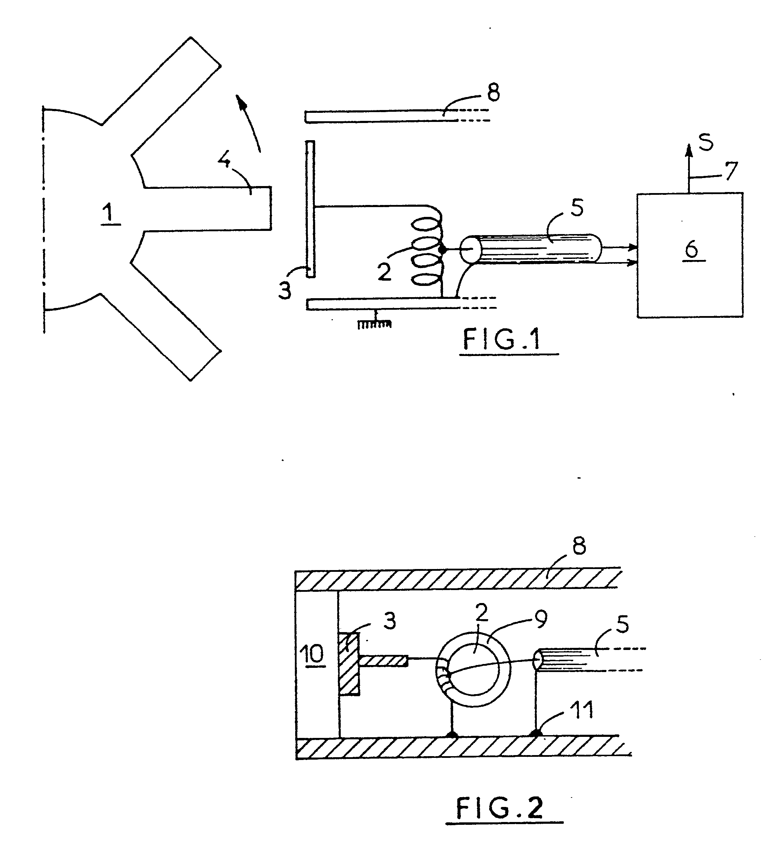

La figure 1 montre un exemple de capteur conforme à l'invention appliqué à la mesure de la vitesse de rotation d'une roue de turbine 1. Ce capteur comporte un circuit résonnant qui se compose d'un élément selfique 2 et d'un condensateur dont l'une des armatures est constituée par une surface conductrice 3 et l'autre successivement par chacune des aubes 4 de la roue de turbine 1 qui passent à proximité de cette surface conductrice 3. Le circuit résonnant est couplé par un câble coaxial 5, à un oscillateur 6 dont la fréquence de fonctionnement est déterminée par la valeur de l'élément selfique, la capacité des différents condensateurs parasites et la capacité du condensateur formée, d'une part, par la surface métallique 3 incorporée au capteur et, d'autre part, par l'aube métallique 4 la plus proche du capteur. Les objets conducteurs qui défilent à proximité du capteur, plus particulièrement dans cet exemple la roue de turbine 1, sont reliés électriquement à l'oscillateur 6. Lorsque la roue de turbine 1 est en rotation à vitesse constante, les aubes métalliques 4 défilent à proximité de la surface métallique du capteur. La valeur de la capacité du condensateur formée par cette surface métallique 3 et la surface des aubes 4 va donc varier selon une loi périodique dont la période est égale à celle du défilement des aubes devant a capteur. Ainsi, la fréquence de la tension S disponible à la borne 7 de sortie de l'oscillateur 6 va donc varier en fonction du temps selon cette même loi. La fréquence maximale de cet oscillateur, en l'absence d'aubes 4, est définie par la valeur de l'élément selfique situé dans le capteur et la capacité des différents condensateurs inhérents à la forme de ce capteur. Par contre, la fréquence minimale de l'oscillateur est obtenu lorsque la capacité du condensateur est maximale, c'est-à-dire lorsqu'une aube 4 se trouve en regard de la surface métallique 3. On remarque que l'élément selfique 2 est placé à l'intérieur d'un boîtier métallique 8 à l'une des extrémités duquel se trouve la surface métallique 3.

La figure 2 montre une disposition particulière des éléments à l'intérieur du boîtier métallique 8. Dans cet exemple, l'élément selfique 2 est constitué par un bobinage torique dont le noyau 9 peut être un tore magnétique. Un tel bobinage permet une meilleure insensibilité à l'environnement radioélectrique. En plus des éléments précédemment décrits, ce capteur comporte une plaque 10 constituée d'un matériau diélectrique qui permet une protection de l'intérieur du capteur vis-à-vis du milieu extérieur (composition chimique, conditions climatiques, etc.), ce qui peut s'avérer nécessaire, par exemple, pour la détermination de la vitesse de rotation d'une turbine. De plus, la constante diélectrique de la plaque 10 permet d'augmenter la capacité du condensateur constitué par la surface conductrice 3 et les objets conducteurs qui défilent devant elle, ce qui augmente la sensibilité du capteur. Des points de fixation 11 sur le corps du boîtier métallique 8 sont prévus pour les contacts de masse. Selon une variante de réalisation, le boîtier 8 pourrait être non conducteur et les points de fixation 11 seraient alors situés sur le conducteur extérieur du câble coaxial 5.

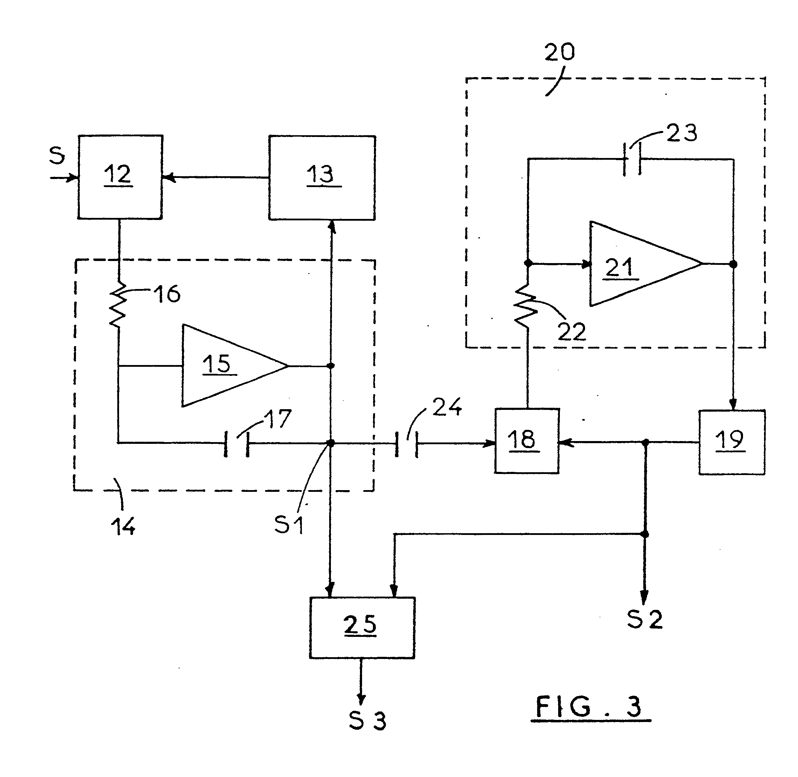

La figure 3 montre un exemple de réalisation préférentielle des circuits utilisés pour le traitement du signal S modulé en fréquence, selon le rythme de défilement des objets conducteurs à proximité du capteur, issus de l'oscillateur 6.

Un premier circuit se compose d'un multiplieur 12, d'un oscillateur commandable 13 et d'un intégrateur 14. L'intégrateur 14 est constitué, d'une manière très classique, d'un amplificateur 15, d'une résistance 16 de valeur R1 et d'un condensateur 17 de valeur C1. Le produit R1C1 détermine la constante de temps de l'intégrateur 14.

Le multiplieur 12 reçoit sur l'une de ses entrées, le signal S et, sur l'autre entrée, le signal issu de l'oscillateur commandable 13. Cet oscillateur 13 et asservi en fréquence sur le signal S par l'intermédiaire d'une boucle de phase classique constituée du multiplieur 12 et de l'intégrateur 14 connecté entre la sortie de ce multiplieur 12 et l'entrée de commande de la fréquence de l'oscillateur commandable 13. Ainsi, le signal S1 de commande d'asservissement de l'oscillateur 13 à la fréquence du signal S est un signal périodique qui correspond très exactement à la fréquence de modulation de l'oscillateur 6. Ce premier circuit formé par le multiplieur 12, l'oscillateur 13 et l'intégrateur 14 constitue donc un discriminateur de fréquence à boucle de phase.

On comprend aisément que le signal périodique S1 est non seulement constitué d'un signal périodique principal qui représente le passage des aubes 4 devant le capteur mais aussi de différents signaux périodiques secondaires consécutifs, par exemple à des vibrations ou des balourds. Il peut donc être souhaitable d'isoler, dans le signal S1, le signal périodique qui correspond effectivement au passage des aubes. A cet effet, on utilise un deuxième circuit constitué, comme le précédent, par une boucle de phase composée d'un multiplieur 18, d'un oscillateur commandable 19 et d'un intégrateur 20, cet intégrateur 20 comprenant lui-même un amplificateur 21, une résistance 22 de valeur R2 et un condensateur 23 de valeur C2. Un condensateur de liaison 24 permet d'éliminer du signal S1 la composante continue. Ainsi, le signal S2 disponible à la sortie de l'oscillateur commandable 19, est un signal alternatif dont la fréquence est asservie à celle de la raie principale du spectre du signal S1. Ce second circuit se comporte comme un filtre passe-bande, centré sur la fréquence du signal à extraire, et ayant une bande passante définie par la valeur du produit R2C2.

La fréquence du signal alternatif S2 permet donc de déterminer avec une grande précision la vitesse de rotation du rotor 1. Cependant, on peut souhaiter utiliser le dispositif de l'invention pour déterminer par exemple les fréquences de vibration du rotor. Dans ce cas, ce sont les signaux périodiques secondaires contenus dans S1 qui sont intéressants. Ce signaux périodiques secondaires peuvent être mis en évidence en effectuant la différence S1—S2. Cette différence peut être obtenue à l'aide d'un circuit d'extraction 25 qui délivre ainsi à sa sortie un signal périodique S3 qui représente les composantes basse fréquence du signal de modulation correspondant, par exemple pour une turbine, aux vibrations des aubes. Selon un mode réalisation, ce circuit d'extraction 25 peut être constitué d'un mélangeur permettant d'obtenir par différence entre les spectres de fréquence des signaux S1 et S2 les composantes basse fréquence.

Un avantage particulier du dispositif de l'invention est le choix possible de la fréquence de l'oscillateur permettant ainsi de se placer dans une zone de fréquence présentant un minimum de bruit radioélectrique. Par ailleurs, le dispositif d'extraction présente, vis-à-vis de parasites, la supériorité inhérente aux procédés à modulation de fréquence dont l'immunité contre ces parasites est élevée.

Un autre avantage du dispositif selon l'invention est le bon fonctionnement en présence d'objets composés de métaux de haute résistivité.

On notera également que le dispositif selon l'invention est sensible aux très faibles variations de fréquence; il permet donc de mesurer des vitesses de rotation très lentes.

Le dispositif de l'invention trouve une application particulièrement intéressante dans le domaine de turbomachines. Il permet en effet de mesurer la vitesse de rotation des rotors, notamment des roues de turbine, ainsi que les modes de vibrations des différents éléments du rotor, notamment des aubes.

## Revendications

1. Capteur de déplacement d'objets (4) mobiles conducteurs comprenant un circuit résonnant composé au moins d'un élément selfique (2) et d'un condensateur caractérisé en ce que une des armatures dudit condensateur est constituée par une surface conductrice (3) et l'autre successivement par chaque objet (4) passant à proximité de cette surface conductrice (3), ledit circuit resonnant étant couplé à un premier oscillateur (6) dont il détermine la fréquence de fonctionnement de sorte que le signal issu de ce premier oscillateur (6) est modulé en fréquence au rythme du passage des objets (4), et en ce que le signal modulé en fréquence issu du premier oscillateur (6) est démodulé au moyen d'un discriminateur de fréquence comportant un second oscillateur (13) asservi par une boucle de phase comprenant un premier circuit multiplieur (12) et un premier intégrateur (14), le signal de référence appliqué à l'une des entrées du premier circuit multiplieur (12) étant le signal modulé en fréquence issu du premier oscillateur (6).

2. Capteur de déplacement d'objets selon la revendication 1, caractérisé en ce que le signal de sortie du premier intégrateur (14) est connecté à une entrée d'un second multiplieur (18) dont la sortie est reliée à la seconde entrée dudit multiplieur (18) par l'intermédiaire d'un second intégrateur (20) et d'un troisième oscillateur (19) montés en série, un circuit 25 effectuant la différence entre le signal de sortie du premier intégrateur (14) et le signal de sortie du troisième oscillateur de sortie (19).

## Patentansprüche

1. Detektor zur Erfassung der Verschiebung beweglicher leitfähiger Objekte (4) mit einem aus wenigstens einem Selbstinduktionselement (2) und einem Kondensator bestehenden Resonanzkreis,
dadurch gekennzeichnet,
daß eine der Belegungen des Kondensators von einer leitfähigen Fläche (3) und die andere Belegung aufeinanderfolgend jeweils von einem Exemplar der genannten Objekte (4) gebildet ist, das in der Nähe der leitfähigen Fläche (3) vorbeiwandert,
daß der Resonanzkreis mit einem ersten Oszillator (6) gekoppelt ist und dessen Frequenz bestimmt, derart daß das von diesem ersten Oszillator (6) abgegebene Signal im Takt des Vorbeigangs der Objekte (4) frequenzmoduliert ist,
und daß das von dem ersten Oszillator (6) abgegebene frequenzmodulierte Signal mit Hilfe eines Frequenzdiskriskriminators demoduliert wird, der einen zweiten Oszillator (13) enthält, welcher durch eine Phasenschleife getriggert wird, die eine erste Multiplizierschaltung (12) und einen ersten Integrator (14) umfaßt, wobei das en einen der Eingänge der ersten Multiplizierschaltung (12) angelegte Referenzsignal das von dem ersten Oszillator (6) abgegebene frequenzmodulierte Signal ist.

2. Detektor zur Erfassung der Verschiebung von Objekten, dadurch gekennzeichnet,
daß das Ausgangssignal des ersten Integrators (14) mit einem Eingang einer zweiten Multiplizierschaltung (18) verbunden ist, deren Ausgang über einen zweiten Integrator (20) und eine mit diesem in Reihe geschalteten dritten Oszillator (19) mit dem zweiten Eingang der genannten Multiplizierschaltung (18) verbunden ist,
und daß eine Schaltung (25) vorgesehen ist, die die Differenz zwischen dem Ausgangssignal des ersten Integrators (14) und dem Ausgangssignal des dritten Oszillators (19) bildet.

## Claims

1. Detector for the displacement of movable conductive objects (4) comprising a resonant circuit including at least one inductive element (2) and a capacitor, characterized in that one of the plates of said capacitor is constituted by a conductive surface (3) and the other successively by each object (4) passing adjacent to this conductive surface (3), the said resonant circuit being coupled to a first oscillator (6) of which it determines the frequency of operation in such a manner that the signal output from this first oscillator (6) is frequency-modulated at the rate of passage of the objects (4), and in that the frequency modulated signal output from the first oscillator (6) is demodulated by means of a frequency discriminator comprising a second oscillator (13) controlled by a phase loop comprising a first multiplier circuit (12) and a first integrator (14), the reference signal applied to one of the inputs of the first multiplier circuit (12) being the frequency modulated signal output from the first oscillator (6).

2. Detector for displacement of objects according to claim 1, characterized in that the output signal of the first integrator (14) is connected to an input of a second multiplier (18) of which the output is connected to the second input of said multiplier (18) through the intermediary of a second integrator (20) and of a third oscillator (19) connected in series, a circuit 25 effecting the difference between the output signal of the first integrator (14) and the output signal of the third output oscillator (19).

FIG.1

FIG.2

FIG . 3